## Europäisches Patentamt

## European Patent Office

## Office européen des brevets

(19)

(11) Veröffentlichungsnummer: **0 045 060**
**B1**

(12) **EUROPÄISCHE PATENTSCHRIFT**

(45) Veröffentlichungstag der Patentschrift:
**10.10.84**

(51) Int. Cl.³: **A 01 B 21/08**

(21) Anmeldenummer: **81105819.7**

(22) Anmeldetag: **23.07.81**

(54) **Halterung für die nachgiebige Abstützung eines Scheibensatzes an dem Rahmen einer Scheibenegge oder dergleichen.**

(30) Priorität: **25.07.80 US 172363**

(43) Veröffentlichungstag der Anmeldung:
**03.02.82 Patentblatt 82/5**

(45) Bekanntmachung des Hinweises auf die Patenterteilung:
**10.10.84 Patentblatt 84/41**

(84) Benannte Vertragsstaaten:
**DE FR GB**

(56) Entgegenhaltungen:
**FR - A - 1 417 208**
**US - A - 1 884 273**
**US - A - 2 762 182**
**US - A - 2 979 138**
**US - A - 3 442 336**
**US - A - 4 066 132**

(73) Patentinhaber: **DEERE & COMPANY, 1 John Deere Road, Moline Illinois 61265 (US)**

(72) Erfinder: **Hentrich, Robert Dale, Sr., R.R.1 Walcott, Iowa 52773 (US)**

(74) Vertreter: **Fricke, Joachim, Dr. et al, Dr. R. Döring, Dr. J. Fricke, Patentanwälte Josephspitalstrasse 7, D-8000 München 2 (DE)**

## Beschreibung

Die Erfindung betrifft eine Halterung für eine nachgiebige Abstützung eines Scheibensatzes an dem Rahmen einer Scheibenegge oder dgl. Gerät, mit einem mit dem Rahmen gelenkig verbundenen, sich im wesentlichen etwa horizontal erstreckenden Lagerarm, der an seinem rückwärtigen Ende den Scheibensatz drehbar unterstützt, und mit einer an dem Lagerarm angreifenden elastischen Einrichtung, die mit ihrem unteren Ende an einem mittleren Bereich des Lagerarmes zwischen dessen vorderem Anlenkende und dessen rückwärtiger Lagerung für den Scheibensatz angelenkt ist, wobei das vordere Ende des Lagerarmes an dem unteren Ende eines am Rahmen befestigten und von diesem nach unten ragenden Stützglied so angelenkt ist, daß er Schwenkbewegungen nur um eine horizontale Achse ausführen kann und die elastische Einrichtung der Aufwärtsbewegung des Lagerarmes einen vorbestimmten elastischen Widerstand entgegengesetzt.

Halterungen für die nachgiebige Abstützung eines Scheibensatzes sind in verschiedenen Ausführungsformen bekannt. So hat man in bestimmter Weise geformte Plattfedern vorgesehen, die in Seitenansicht C-förmig, S-förmig, Z-förmig oder nach Art einer Sicherheitsnadel gebogen und mit ihren Schenkelenden an dem Eggenrahmen bzw. an einem Lagerhalter des Scheibensatzes befestigt sein können (vgl. US-A-3 442 336, 3 640 348 oder 4 066 132).

Ferner sind relativ komplizierte Stützgestänge zwischen Eggenrahmen und dem Scheibensatz bekannt, deren Gestängeglieder eine oder mehrere Schraubenfedern als elastische Einrichtung zugeordnet sind. Solche komplizierten Gestängeanordnungen zeigen beispielsweise die US-A-2 762 182, 1 884 273 oder die US-A-2 979 138.

Von der letzteren ist im Oberbegriff des Anspruchs 1 ausgegangen. Bei der bekannten Halterung ist ein am Rahmen befestigtes und von diesem nach unten ragendes Stützglied vorgesehen, an dessen unteren Ende das vordere Ende eines Lagerarms angelenkt ist, der an seinem etwa horizontal nach hinten weisenden rückwärtigen Ende die Lagerhalterung für den Scheibensatz trägt. Im Bereich der Mitte zwischen den Enden des Lagerarms greift eine elastische Einrichtung an, die eine nach oben ragende Stange aufweist, die etwa auf halber Länge an dem rückwärtigen freien Ende einer Gabel angelenkt ist, die ihrerseits sich nach vorn in Richtung auf das Rahmenglied erstreckt und an einer Schwenkwelle befestigt ist, die in einer an dem Rahmenglied befestigten Schwenklagerung drehbar gelagert ist. Oberhalb der Anlenkstelle an die Gabel weist die Stange eine Druckfeder auf, die auf dem oberen Ende der Stange aufgefädelt ist und sich am oberen Ende an einem Widerlager abstützt. Die mit der Schwenkwelle verbundene Gabel ist mit dem Lagerarm zusätzlich über eine Kette verbunden, so daß bei Verschwenken der Schwenkwelle der Lagerarm angehoben werden kann. Bei dieser bekannten Anordnung ragen alle Teile des die Halterung bildenden Stützgestänges weit über den Umfang der Scheiben hinaus, welche den Scheibensatz bilden. Die Anordnung ist daher nicht nur kompliziert, sondern benötigt auch sehr viel Einbauraum und ist wegen der zahlreichen Teile und ihrer großen Länge leicht Beschädigungen ausgesetzt.

Wenn zur Abstützung von Scheibensätzen C-förmige Stützplattfedern verwendet werden, führen diese bei Auftreffen der Scheiben auf Hindernisse zu ungleichen Reaktionskräften und damit zu ungleicher Auslenkung. Dadurch verändert sich die relative Lage des Scheibensatzes gegenüber der Fahrtrichtung, was unerwünscht ist. Mit Halterungen, die durch Gestänge ausgebildet sind, kann erreicht werden, daß diese relative Lageänderung vermieden wird. Derartige, als Gestänge ausgebildete Halterungen, sind jedoch, wie aufgezeigt, kompliziert und nachteilig. Dies gilt nicht nur für Herstellung, sondern auch für Montage und Wartung.

Es ist Aufgabe der Erfindung, eine Halterung der eingangs näher bezeichneten Art so weiterzubilden, daß die gewünschte Nachgiebigkeit ohne relative Veränderung der Lage gegenüber dem Eggenrahmen in einer horizontalen Ebene sichergestellt ist und zwar mit einer Halterung, die besonders einfach, robust, billig in Herstellung, Montage und Wartung und nur geringem Verschleiß unterworfen ist.

Diese Aufgabe wird erfindungsgemäß dadurch gelöst, daß das obere Ende des Stützgliedes einen im wesentlichen nach rückwärts ragenden Flansch aufweist, daß die elastische Einrichtung sich mit ihrem oberen Ende an diesem Flansch des Stützgliedes abstützt und daß die wirksame Länge des Lagerarmes zwischen Anlenkstelle und dem die Lagerung aufweisenden Ende nicht größer als der Radius der Scheiben des Scheibensatzes ist.

Bei dieser Ausführungsform dient das Stützglied gleichzeitig zur Abstützung des Lagerarmes und der elastischen Einrichtung. Dabei liegt die elastische Einrichtung praktisch parallel und unmittelbar neben dem Stützglied. Der Einbauraum für die Halterung ist damit außerordentlich klein, wobei keine Teile über den Eggenrahmen nach oben hinausragen. Durch den gedrängten Aufbau ist die Anordnung auch außerordentlich robust. Sie besteht nur aus wenigen Teilen und läßt sich daher leicht montieren. Sie hat nur wenige Lagerstellung und ist daher nur geringem Verschleiß unterworfen. Wegen der kurzen Baulängen der einzelnen Teile können diese ohne Gewichtsvermehrung besonders belastbar ausgebildet sein. Trotz der gedrängten Bauweise kommt der Anlenkpunkt des Lagerarms an dem Stützglied vergleichsweise tief unter dem Eggenrahmen zu liegen, da die Länge des Stützgliedes etwa der Länge der elastischen Einrichtung entspricht. Die Reaktionskraft greift bei normalem Betrieb mit nur relativ kleinem Drehmomentarm an dem Lagerarm an, so daß eine relativ geringe Vorspannkraft ausreicht, um den Lagerarm während des normalen Betriebes in einer vorbestimmten Stellung und die Scheiben des Scheibensatzes in einer vorbestimmten Eindringtiefe in das Erdreich zu halten. Auf der anderen Seite reicht die bei Auftreffen auf ein Hindernis auftretende Reaktionskraft aus, um die Vorspannkraft zuverlässig zu überwinden.

Die Halterung ist in ihrem Aufbau außerordentlich einfach und leicht und billig herzustellen und weist nur wenige, einem Verschleiß unterworfene Stellen auf. Der gedrängte Aufbau vereinfacht auch die Montage einer üblichen Schabeeinrichtung zum Freihalten der einzelnen Scheiben des Scheibensatzes.

Die Erfindung wird nachfolgend anhand schematischer Zeichnungen an einem Ausführungsbeispiel näher erläutert: Es zeigt

Fig. 1 eine perspektivische Ansicht einer Scheibenegge mit der Halterung gemäß der Erfindung.

Fig. 2 in Draufsicht einen Scheibensatz, der an dem Eggenrahmen mit Hilfe der Halterung gemäß der Erfindung angebracht ist, wobei die Lage der einzelnen Scheiben gegenüber der Fahrtrichtung angedeutet ist.

Fig. 3 eine Seitenansicht der neuen Halterung mit Blickrichtung entsprechend der Pfeile 3-3 in Fig. 2, und

Fig. 4 in ähnlicher Darstellung wie Fig. 3 die Ausführung einer bisher häufig verwendeten Halterung.

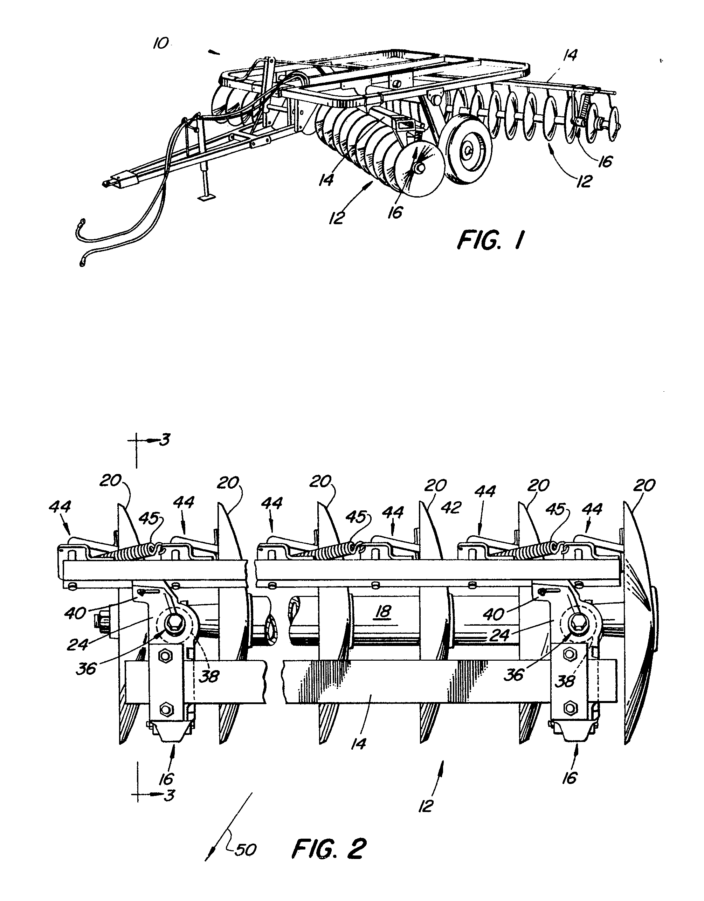

Die Scheibenegge 10, die in Fig. 1 dargestellt ist, umfaßt mehrere Scheibensätze 12. Jeder ist von einem Rahmenglied 14 von rechteckförmigem Querschnitt mit Hilfe von wenigstens zwei Halterungen 16 hängend unterstützt. Jeder Scheibenansatz 12 umfaßt einen langgestreckten Satzbolzen 18, auf dem mehrere als Bodenbearbeitungswerkzeuge ausgebildete Scheiben 20 in festen gegenseitigen axialen Abständen angeordnet sind.

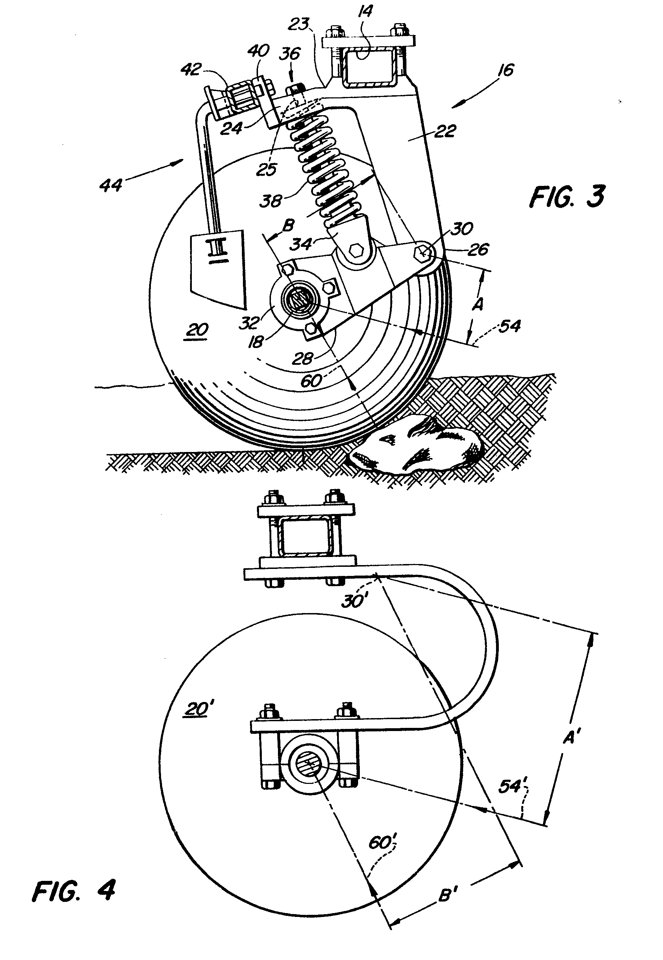

Gemäß Fig. 2 und 3 umfaßt jede Halterung 16 ein starres Stützglied 22, dessen oberes Ende 23 an dem Rahmenglied 14 befestigt oder festgeschraubt ist. Das obere Ende des Stützgliedes 22 umfaßt einen im wesentlichen nach rückwärts ragenden Flansch 24 mit einer Bohrung 25. Das Stützglied 22 erstreckt sich zwischen dem oberen Ende 23 und dem unteren Ende 26 im wesentlichen nach unten und leicht nach vorne oder in Fahrtrichtung. Jede Halterung 16 umfaßt ferner einen starren Lagerarm 28, dessen vorderes Ende bei der Anlenkstelle 30 an dem unteren Ende 26 des Stützgliedes 22 angelenkt ist. Die Anlenkstelle 30 ermöglicht ein Schwenken des Lagerarmes 28 in einer senkrechten Ebene, verhindert jedoch, daß der Arm 28 gegenüber dem Stützglied 22 in einer horizontalen Ebene verschwenken oder verkippen kann. Am rückwärtigen Ende des Lagerarmes 28 ist eine Lageranordnung 32 festgeschraubt. Diese unterstützt drehbar den Satzbolzen 18, der sich durch die Lageranordnung erstreckt. Der horizontale Abstand zwischen der Anlenkstelle 30 und der Lageranordnung 32 ist größer als der senkrechte oder lotrechte Abstand zwischen diesen beiden Stellen. Ein Jochelement 34 ist an einem mittleren Bereich des Lagerarmes 28 zwischen dessen vorderem und rückwärtigem Ende angelenkt. Der Schaft eines Bolzens 36 erstreckt sich durch die Bohrung 25 des Flansches 24. Sein Gewindeende greift in den Jochteil 34 ein. Der Kopf des Bolzens 36 liegt an der Oberseite des Flansches 24 an und begrenzt auf diese Weise die Schwenkbewegung des Lagerarmes 28 nach unten. Gleichzeitig wird durch diese Anlage eine vorbestimmte Vorspannung oder Zusammenpressung eines Federelementes 38 aufrechterhalten. Das Federelement 38 ist im dargestellten Beispiel als Schraubenfeder gezeigt. Es ist jedoch ersichtlich, daß andere elastische Einrichtungen verwendet werden können. Die Schraubenfeder 38 umgibt koaxial den Schaft des Bolzens 36. Die Feder ist auf diese Weise zwischen dem Joch 34 und der Unterseite des Flansches 24 eingespannt. Das rückwärtige Ende des Flansches 24 endet in einer Halterung 40, an die ein rohrförmiges Querglied 42 angeschraubt sein kann. Mehrere Schaberklingen 44 sind an dem Querglied 42 schwenkbar gelagert und werden durch Federn 45 jeweils in Eingriff mit einer der Scheiben 20 gehalten oder vorgespannt.

Bei Betrieb der Scheibenegge 10 werden die Scheiben 20 typischerweise in eine Richtung durch den Boden gezogen, wie sie in Fig. 2 durch den Pfeil 50 angedeutet ist. Dabei verläuft die Fahrtrichtung unter einem vorbestimmten Winkel in bezug auf die senkrechten Ebenen der Scheiben 20. Der Durchgang der Scheiben 20 durch das Erdreich erzeugt typischerweise Arbeits- oder Reaktionskräfte, welche auf den Scheibensatz 12 in einer Richtung einwirken, die eine relativ kleine Neigung in bezug auf die horizontale Ebene besitzt und der Fahrtrichtung der Scheiben 20 entgegengerichtet ist. Diese Arbeitskräfte können auf die entgegengesetzten Enden eines Scheibensatzes 12 ungleichförmig einwirken, beispielsweise dann, wenn das eine Ende des Scheibensatzes tiefer in das Erdreich eingreift als das andere Ende. Diese ungleichen Arbeitskräfte haben die Tendenz, den Scheibensatz 12 in einer horizontalen Ebene gegenüber dem Rahmen 14 zu kippen oder verschwenken.

Mit Hilfe der neuen Halterung 16 erstreckt sich der Lagerarm im wesentlichen horizontal und gegenüber der Fahrtrichtung nach rückwärts vom unteren Ende 26 des Stützgliedes 22 aus, wenn sich die Scheibenegge in üblicher Arbeitsstellung befindet. Aufgrund dieser Anordnung und aufgrund der Schwenkverbindung am Anlenkpunkt 30 zwischen dem Stützglied 22 und dem Lagerarm 28 wird erreicht, daß der Lagerarm 28 gegenüber einem Verschwenken oder Kippen in einer horizontalen Ebene im Verhältnis zu dem Stützglied 22 und dem Rahmenglied 14 gehindert ist, indem der Lagerarm so an dem Stützglied geführt ist, daß er nur um die horizontale Achse der Anlenkstelle 30 schwenken kann. Damit wird der Satzbolzen 18 mit den zugehörigen Scheiben 20 so geführt, daß diese Einheit sich im wesentlichen nur in einer senkrechten Richtung bewegen kann während eine Bewegung in einer horizontalen oder seitlichen Richtung etwa unter dem Einfluß der oben erwähnten ungleichen Reaktionskräfte, weitgehend ausgeschlossen ist. Damit können zwei solche Halterungen 16, die im gegenseitigen Abstand zwischen dem Rahmenglied 14 und dem Scheibensatz 12 angeordnet sind, ein Kippen des Scheibensatzes 12 in einer horizontalen Ebene gegenüber dem Rahmenglied 14 zuverlässig verhindern. Die beiden Halterungen können vielmehr den gewünschten Winkel zwischen den Ebenen der Scheiben 20 und der zugehörigen Fahrtrichtung zuverlässig aufrechterhalten.

Eine typische Reaktionskraft bei normalem Betrieb wirkt auf die Scheiben 20 in Richtung des Pfeiles 54 (vergl. Fig. 3). Diese Kraft neigt dazu, den Lagerarm 28, den Satzbolzen 18 und die Scheiben 20 nach oben und damit Uhrzeigersinne gegenüber dem Rahmenglied 14 und dem Stützglied 22 zu verschwenken (bezogen auf die Darstellung in Fig. 3). Der Einstellbolzen 36 kann jedoch zur Einstellung der Vorspannung der Feder 38 so verstellt werden, daß die Vorspannung oder Vorlast der Feder 38 ausreichend groß ist, um im wesentlichen jede Schwenkbewegung des Lagerarmes 28 und der Scheiben 20 während des normalen Betriebes auszuschließen. In diesem Falle und unter den genannten Umständen wird die Halterung somit als starres Glied, solange normale Arbeitsbedingungen bei normalen Reaktionskräften durch den Bodeneingriff vorherrschen.

Wenn jedoch eine der Scheiben 20 auf einen Felsen oder auf ein ähnliches Hindernis im Boden trifft kann diese Scheibe einem Widerstand ausgesetzt werden, dessen Reaktionskraft in bezug auf die horizontale Ebene eine wesentlich größere Neigung der Wirkrichtung als normalerweise aufweist, wie dies durch den Pfeil 60 in Fig. 3 angedeutet ist. Dadurch weist die Reaktionskraft von dem Hindernis eine wesentlich größere vertikale Komponente auf, die ausreicht, die Vorspannung der Federn 38 zu überwinden, so daß der Lagerarm 28 mit der Scheibe 20 um die Anlenkstelle 30 im Uhrzeigersinne schwenken kann, wodurch die Scheibe 20 über das Hindernis hinwegsteigt. Auf diese Weise kann die Feder 38 die Stoßenergie zwischen Scheibe 20 und dem Hindernis absorbieren und ableiten, so daß eine Beschädigung der Komponenten der Scheibenegge 10 zuverlässig ausgeschlossen ist.

Das Verständnis der Wirkungsweise der Halterung 16 kann durch eine Erörterung des auftretenden Momentenarmes noch erleichtert werden. Während des normalen Arbeitsbetriebes wirkt die typische Arbeits- oder Reaktionskraft 54 auf den Lagerarm 28 über einen Momentarm mit der Länge A, die in Fig. 3 aufgezeigt ist. Während des Auftreffens auf ein Hindernis wirkt die wesentlich steilere Reaktionskraft 60 des Hindernisses auf den Lagerarm über einen wesentlich längeren Momentenarm B, der ebenfalls in Fig. 3 eingezeichnet ist. Betrachtet man Fig. 3, so ist in der Tat ersichtlich, daß der Momentenarm, über den irgendeine Kraft auf den Lagerarm 28 einwirkt, abnimmt, wenn der Winkel der Kraft in bezug auf eine horizontale Ebene abnimmt.

Vergleicht man demgegenüber eine bekannte Halterung gemäß Fig. 4 mit C-förmiger Blattfeder, so wird deutlich, daß der Momentenarm A' über den die typischerweise relativ flach geneigte normale Reaktionskraft 54' auf die Halterung einwirkt, wesentlich größer ist als der Momentenarm B', mit dem die wesentlich steilere Reaktionskraft 60' bei Auftreffen einer Scheibe auf ein Hindernis zur Wirkung kommt. Dies ergibt sich aus der Tatsache, daß die Scheibe 20' um einen Anlenkpunkt 30' verschwenkt wird, der nahe dem oberen Ende der C-förmigen Blattfeder liegt.

Im Gegensatz dazu kippen bei der neuen Halterung 60 die Scheibe 20 und der Lagerarm 28 um einen Schwenkpunkt 30, der wesentlich unterhalb der Ebene des Rahmengliedes 14 und nahezu auf dem gleichen senkrechten Niveau wie die Achse des Satzbolzens 18 liegt. Da außerdem die Reaktionskraft eines Hindernisses dazu neigt größer zu sein als die normale Arbeits-Reaktionskraft ist das sich aus dieser Kraft ergebende Moment, welches den Lagerarm 28 und eine der Scheiben 20 während einer Kollision zwischen der Scheibe und einem Hindernis nach oben zu drängen sucht, viel größer als das Kraftmoment, das sich bei normaler typischer Arbeitsweise ergibt. Damit ist die Halterung 16 gemäß der Erfindung während des normalen Arbeitsvorganges im wesentlichen starr, kann aber in der gewünschten Weise nachgeben, wenn eine der Scheiben auf ein Hindernis trifft.

## Patentansprüche

1. Halterung für eine nachgiebige Abstützung eines Scheibensatzes (12) an dem Rahmen (14) einer Scheibenegge (10) oder dgl. Gerät, mit einem mit dem Rahmen (14) gelenkig verbundenen, sich im wesentlichen etwa horizontal erstreckenden Lagerarm (28), der an seinem rückwärtigen Ende den Scheibensatz (12) drehbar unterstützt, und mit einer an dem Lagerarm (28) angreifenden elastischen Einrichtung (38), die mit ihrem unteren Ende an einem mittleren Bereich des Lagerarmes zwischen dessen vorderem Anlenkende (30) und dessen rückwärtiger Lagerung (18) für den Scheibensatz angelenkt ist, wobei das vordere Ende des Lagerarmes (28) an dem unteren Ende (26) eines am Rahmen (14) befestigten und von diesem nach unten ragen den Stützglieds (22) so angelenkt ist, daß er Schwenkbewegungen nur um eine horizontale Achse ausführen kann und die elastische Einrichtung (38) der Aufwärtsbewegung des Lagerarmes (28) einen vorbestimmten elastischen Widerstand entgegensetzt, dadurch gekennzeichnet, daß das obere Ende (23) des Stützgliedes (22) einen im wesentlichen nach rückwärts ragenden Flansch (24) aufweist, daß die elastische Einrichtung (38) sich mit ihrem oberen Ende an diesem Flansch (24) des Stützgliedes (22) abstützt, und daß die wirksame Länge (B) des Lagerarmes (28) zwischen Anlenkstelle (30) und dem die Lagerung (32) aufweisenden Ende nicht größer als der Radius der Scheiben (20) des Scheibensatzes (12) ist.

2. Halterung nach Anspruch 1, dadurch gekennzeichnet, daß das vom Rahmen (14) nach unten ragende Stützglied (22) zugleich merklich nach vorne geneigt ist.

3. Halterung nach Anspruch 1, dadurch gekennzeichnet, daß zwischen dem oberen Ende (23, 24) des Stützgliedes (24) und dem Lagerarm (28) ein die Spreizbewegung zwischen diesen Teilen begrenzendes einstellbares Begrenzungsglied (36) vorgesehen ist, das von einer Druckfeder der Vorspanneinrichtung (38) umgeben ist.

4. Halterung nach Anspruch 1, dadurch gekennzeichnet, daß das obere Ende (23) des Stützgliedes (32) eine nach oben offene Ausnehmung zur Aufnahme des Rahmens (14) aufweist.

## Claims

1. A mounting for yieldingly supporting a disc array (12) on the frame (14) of a disc harrow or like implement, comprising a mounting arm (28) which is pivotally connected to the frame (14) and which extends substantially approximately horizontally and which at its rearward end rotatably supports the disc array (12), and comprising a resilient means (38) which engages the mounting arm (28) and which is connected by its lower end to a middle portion of the mounting arm between the front pivot mounting end (30) thereof and the rearward mounting means (18) for the disc array, wherein the front end of the mounting arm (28) is connected to the lower end (26) of a support member (22) which is secured to the frame (14) and which projects downwardly therefrom, in such a way that it can perform pivotal movements only about a horizontal axis, and the resilient means (38) opposes a predetermined resilient resistance to the upward movement of the mounting arm (28), characterised in that the upper end (23) of the support member (22) has a substantially rearwardly projecting flange (24), that the resilient means (38) bears by means of its upper end against said flange (24) on the support member (22), and that the effective length (B) of the mounting arm (28) between the pivot location (30) and the end having the mounting means (32) is no greater than the radius of the discs (20) of the disc array (12).

2. A mounting according to claim 1, characterised in that the support member (22) which projects downwardly from the frame (14) is at the same time inclined markedly forwardly.

3. A mounting according to claim 1, characterised in that disposed between the upper end (23, 24) of the support member (24) and the mounting arm (28) is an adjustable restrictor member (36) which restricts the spreading movement between said components and which is surrounded by a compression spring of the biasing means (38).

4. A mounting according to claim 1, characterised in that the upper end (23) of the support member (32) has an upwardly open opening for accommodating the frame (14).

## Revendications

1. Dispositif de fixation pour un montage flexible d'un jeu de disques (12) sur le châssis (14) d'un pulvériseur à disques (10) ou analogue, comportant un bras de support (28) relié à articulation au châssis (14) et s'étendant en principe presque horizontalement, ce bras supportant à rotation le jeu de disques (12) par son extrémité arrière, et un dispositif élastique (38) attaquant le bras de support (28), ce dispositif étant articulé par son extrémité inférieure sur une partie médiane du bras de support, entre son extrémité d'articulation avant (30) et son point de montage arrière (18) formant palier supportant le jeu de disques, l'extrémité avant du pras de support (28) étant articulée à l'extrémité inférieure (26) d'un organe de montage (22) fixé sur le châssis (14) et faisant saillie vers le bas à partir de celui-ci, de telle sorte qu'il ne puisse effectuer des mouvements de pivotement qu'autour d'un axe horizontal, le dispositif élastique (38) s'opposant par une résistance élastique prédéterminée au mouvement vers le haut du bras de support (28), caractérisé en ce que l'extrémité supérieure (23) de l'organe de montage (22) présente une patte ou bride (24) faisant saillie en principe vers l'arrière, en ce que le dispositif élastique (38) prend appui par son extrémité supérieure sur cette patte ou bride (24) de l'organe de montage, et en ce que la longueur efficace (B) du bras de support (28) entre le point d'articulation (30) et l'extrémité présentant le système de palier (32) n'est pas supérieure au rayon des disques (20) du jeu de disques (12).

2. Dispositif de fixation suivant la revendications 1, caractérisé en ce que l'organe de montage (22) faisant saillie vers le bas à partir du châssis (14) est en même temps incliné de façon notable vers l'avant.

3. Dispositif de fixation suivant la revendication 1, caractérisé en ce qu'il est prévu, entre l'extrémité supérieure (23, 24) de l'organe de montage (22) et le bras de support (28), un organe de limitation réglable (36) limitant le mouvement d'écartement entre ces éléments, cet organe étant entouré par un ressort de compression du dispositif de sollicitation ou de précontrainte (38).

4. Dispositif de fixation suivant la revendication 1, caractérisé en ce que l'extrémité supérieure (23) de l'organe de montage (32) présente un évidement ouvert en direction du haut pour la réception du châssis (14).

FIG. 1

FIG. 2

FIG. 3

FIG. 4